# EUROPÄISCHE PATENTANMELDUNG

(11) **EP 1 553 673 A2**
(43) Veröffentlichungstag der Anmeldung: **13.07.2005**
(21) Anmeldenummer: 04106966.7
(22) Anmeldetag: 23.12.2004
(51) Int. Cl.: H02G 3/04

(54) **Kabeltragvorrichtung**

(30) Priorität: 08.01.2004 DE 202004000122 U
(71) Anmelder: OBO Bettermann GmbH & Co. KG., 58710 Menden (DE)
(72) Erfinder:
(74) Vertreter: Haverkamp, Jens

(57) **Zusammenfassung**

Eine Kabeltragvorrichtung 1 mit zwei mit Abstand zueinander verlaufenden, mit einem Steg 3 eine Kabelaufnahme 7 seitlich einfassenden Holmen 2 und mit einer die beiden Holme 2 im Bereich ihres unteren Abschlusses miteinander verbindenden und die Kabelaufnahme 7 unterseitig begrenzenden Bodeneinheit 6, ist dadurch bestimmt, dass an den beiden Holmen 2 an ihrer jeweils zur Kabelaufnahme 7 weisenden Seite ein oder mehrere Holmstützen 8 angeordnet sind, die sich mit ihrer Unterseite auf der Oberseite der Bodeneinheit 6 mit Abstand zur Ebene des Steges 3 der Holme 2 abstützen und rückseitig an einem Holm 2 in einer den Holm 2 im Bereich der Holmstütze 8 aussteifenden Anordnung befestigt sind.

## Beschreibung

Die Erfindung betrifft eine Kabeltragvorrichtung mit zwei mit Abstand zueinander verlaufenden, mit einem Steg eine Kabelaufnahme seitlich einfassenden Holmen und mit einer die beiden Holme im Bereich ihres unteren Abschlusses miteinander verbindenden und die Kabelaufnahme unterseitig begrenzenden Bodeneinheit.

Derartige Kabeltragvorrichtungen werden zur stationären Verlegung von Kabeln, Schläuchen, Rohrleitungen oder dergleichen eingesetzt. Die Kabeltragvorrichtungen bestehen aus jeweils zwei parallel und mit Abstand zueinander verlaufenden Holmen, den sogenannten Seitenholmen. Die Seitenholme umfassen einen vertikalen Steg, an dessen Unterseite ein Schenkel zum Unterstützen und Tragen der Bodeneinheit abgekantet ist. Die Bodeneinheit kann durch ein Bodenblech oder auch durch mit Abstand zueinander in Längserstreckung der Kabeltragvorrichtung angeordnete Sprossen gebildet sein. Durch die Holme und die Bodeneinheit ist sodann ein nach oben offener Kabelkanal gebildet. Die beiden Seitenholme weisen am oberen Ende des vertikalen Steges eine weitere, unter Umständen auch U-förmig ausgeführte Abkantung auf, die zum einen der Formstabilisierung der Holme dient und zum anderen eine Möglichkeit bietet, die Kabeltragvorrichtung aufzuhängen. Derartige Kabeltragvorrichtungen werden u. a. im Hallenbau eingesetzt, wobei eine Anbindung oder Befestigung der Kabeltragvorrichtung immer nur im Abstand der Deckenstützen bzw. -träger erfolgen kann. Dieser Abstand kann 6 m, 12 m oder auch eine größere Anzahl an Metern betragen. Dies bedeutet, dass zwischen den Anbindungsstellen die Kabeltragvorrichtung frei hängt. Bei einer Belastung einer derart aufgehängten Kabeltragvorrichtung durch die eingelegten Kabel ist sowohl in Längs- als auch in Querrichtung eine gewisse Durchbiegung zu beobachten. Eine Durchbiegung in Querrichtung der Kabeltragvorrichtung hat zur Folge, dass die die Kabelaufnahme seitlich begrenzenden Holme mit ihren oberen Abschlüssen zueinander bewegt werden. Auch wenn ein gewisses Maß einer solchen Verwindung, ohne statische Nachteile in Kauf zu nehmen, toleriert wird, ist man in aller Regel bestrebt, eine solche Verwindung der Holme, die auch durch eine übermäßige Längsdurchbiegung verursacht sein kann, möglichst zu vermeiden.

Aus EP 0 460 350 B1 ist eine Weitspannkabelpritsche bekannt geworden, die zur Reduzierung einer solchen Verwindung im Bereich des unteren Abschlusses eine der Längserstreckung der Holme folgende, durch eine Profilierung gebildete Tasche aufweist, in die die Sprossen mit einem Randabschnitt eingreifen. Somit befindet sich die Ebene des Seitenholmes bei der aus diesem Dokument bekannten Kabelpritsche im Gegensatz zu gegenüber dieser Weitspannpritsche vorbekannten Kabelpritschen, bei denen der vertikale Schenkel des Seitenholms in Querrichtung benachbart zu den Sprossen angeordnet war, oberhalb der Sprossen. Bei einer Belastung dieser vorbekannten Kabeltragvorrichtung stützt sich der vertikale Steg jedes Holmes auf der Oberseite der Sprossen ab, was einer Verwindung entgegenwirkt. Auch wenn mit dieser vorbekannten Weitspannkabelpritsche die Tragfähigkeit gegenüber früheren Kabelpritschen erhöht ist, wird mitunter die zur Realisierung dieser Kabelpritsche notwendige untere Breite durch die Taschenbildung als nachteilig angesehen, die sich über die gesamte Länge der Kabeltragvorrichtung erstreckt.

Bei der aus diesem Dokument bekannten Weitspannpritsche sind die einzelnen Sprossen gelenkig an dem unteren abgekanteten Schenkel der Seitenholme befestigt, so dass zur Reduzierung eines Transportvolumens diese Weitspannpritsche zusammengelegt werden kann. Beim Aufstellen der zusammengelegten Weitspannpritsche schwenken die freien Enden der Sprossen in die unterseitigen Taschen der Seitenholme ein. Um diesen Vorgang nicht zu behindern, ist die lichte Weite dieser Tasche der Holme mit einem positiven Spiel bemessen. Ein Gegenmoment zum Vermeiden oder Reduzieren einer Verwindung der Holme durch die Sprossen kann jedoch erst dann bereitgestellt werden, wenn bei einer Belastung dieser Weitspannpritsche eine Verwindung der Holme bereits soweit stattgefunden hat, dass dieses Spiel beseitigt worden ist. Dies bedeutet, dass zum Bereitstellen des notwendigen Gegenmomentes eine gewisse Verwindung in Kauf genommen wird.

Ausgehend von diesem diskutierten Stand der Technik liegt der Erfindung daher die Aufgabe zugrunde, eine eingangs genannte Kabeltragvorrichtung dergestalt weiterzubilden, dass die zu dem vorgenannten Stand der Technik aufgezeigten Nachteile vermieden, zumindest jedoch reduziert sind.

Diese Aufgabe wird erfindungsgemäß durch eine eingangs genannte, gattungsgemäße Kabeltragvorrichtung gelöst, bei der an den beiden Holmen an ihrer jeweils zur Kabelaufnahme weisenden Seite ein oder mehrere Holmstützen angeordnet sind, die sich mit ihrer Unterseite auf der Oberseite der Bodeneinheit mit Abstand zur Ebene des Steges der Holme abstützen und rückseitig an einem Holm in einer den Holm im Bereich der Holmstütze aussteifenden Anordnung befestigt sind.

Bei dieser Kabeltragvorrichtung sind zur Vermeidung bzw. zur Minimierung einer Verwindung der Holme individuelle Holmstützen vorgesehen, die zur Aussteifung der Kabeltragvorrichtung an der zur Kabelaufnahme weisenden Seite der Holme befestigt sind. Zum Erzielen des gewünschten Gegenmomentes stützen sich diese Holmstützen mit ihrer Unterseite auf der Oberseite der Bodeneinheit ab. Da die Holmstützen innenseitig an den Holmen angeordnet sind, erfolgt diese Abstützung mit Abstand zur Ebene des vertikalen Schenkels eines Holmes, so dass die beschriebene Abstützung über einen Hebelarm erfolgt. Die Holmstützen selbst weisen eine gewisse vertikale Erstreckung auf und sind rückseitig an einem Holm befestigt, zweckmäßigerweise formschlüssig. Durch eine solche Befestigung wirken die Holmstützen als Querrippen und vermögen somit den Holm insgesamt in vertikaler Richtung zu versteifen. Somit erfolgt bei dem Gegenstand dieser Kabeltragvorrichtung nicht nur eine Abstützung des vertikal verlaufenden Schenkels der Seitenholme sondern auch eine Versteifung, die einer Verwindung wirksam entgegenwirkt.

Die Holmstützen sind zweckmäßigerweise individuelle Teile, die nach Ausbilden der Kabelaufnahme an den jeweils gewünschten bzw. benötigen Positionen an den beiden Holmen vor oder auch nach einer Montage der Kabeltragvorrichtung befestigt werden können. Somit kann bei dieser Kabeltragvorrichtung eine Versteifung auf diejenigen Abschnitte der Kabeltragvorrichtung beschränkt werden, in denen eine Verwindung der Holme eintritt bzw. zu erwarten ist.

Die beschriebenen Holmstützen wird man zweckmäßigerweise dergestalt an den Innenseiten der Holme anordnen, dass auch im unbelasteten Zustand der Kabelpritsche sich diese unterseitig auf der Oberseite der Bodeneinheit, die beispielsweise durch Sprossen oder eine Pritsche gebildet sein kann, abstützen. Ein noch besseres Ergebnis kann erzielt werden, wenn sich die Holmstützen mit einer gewissen Vorspannung mit ihrer Unterseite auf der Oberseite der Bodeneinheit abstützen. Bei einer solchen Anordnung ist ein formstabiles offenes Kastenprofil auch im unbelasteten Zustand bereitgestellt, das eine ausgesprochen hohe Formstabilität aufweist, insbesondere ohne dass eine gewisse Verwindung bzw. Verformung der Holme in Kauf genommen werden muss.

Die Holmstützen können auf unterschiedliche Art und Weise an den Innenseiten der Holme befestigt werden. Beispielsweise kann vorgesehen sein, dass die Holmstützen rückseitig jeweils ein abragendes hakenartiges Befestigungselement aufweisen, das endseitig ein Riegelglied trägt. Dieses Riegelglied wird durch eine Öffnung des Holmes hindurchgeführt, so dass dieses anschließend den Holm hintergreift. Anstelle einer Öffnung kann ebenfalls eine nutenförmige Aufnahme des Holms vorgesehen sein. Eingebracht wird das Riegelelement in diese den Holm hintergreifende Stellung etwa durch Vorsehen einer Holmöffnung, die nach Art eines Schlüsselloches ausgebildet ist und einen Einsetzabschnitt aufweist, der groß genug ist, damit das Riegelglied durch diesen hindurch gesteckt werden kann, und ferner einen Verriegelungsabschnitt aufweist, dessen lichte Weite kleiner ist als die Größe des Riegelgliedes, so dass dieses außenseitig an dem Holm anliegt. Die Orientierung dieser schlüssellochförmigen Öffnungen kann in horizontaler oder auch in vertikaler Richtung vorgesehen sein. Bei einer Konzeption derartiger Öffnungen wird man diese zweckmäßigerweise dergestalt bemessen, dass die oberseitige Begrenzung der Öffnung bzw. der Aufnahme auf einem das Riegelglied mit der Holmstütze verbindenden Steg als Teil eines Befestigungselementes anliegt, wenn sich die Unterseite der Holmstütze auf der Oberseite der Bodeneinheit abstützt. Auf diese Weise ist eine spielfreie Abstützanordnung gegeben.

Zum Verriegeln einer solchen Holmstütze innerhalb des Verriegelungsabschnittes einer solchen vorbeschriebenen Holmöffnung kann zwischen dem Einsetzabschnitt und dem Verriegelungsabschnitt eine Einschnürung mit gewissen materialelastischen Eigenschaften angeordnet sein, durch die der das Riegelglied tragende Steg der Holmstütze hindurchgeführt werden muss.

Zum Anbinden einer solchen Holmstütze an der Innenseite eines Holmes können auch elastisch bzw. federelastisch reagierende Befestigungselemente vorgesehen sein, so dass unter Einsatz derartiger Elemente eine Holmstütze klipsähnlich an der Innenseite eines Holmes angebracht werden kann.

Bei der beschriebenen Kabeltragvorrichtung können ohne weiteres auch nachträglich Holmstützen eingesetzt werden, beispielsweise wenn bei einer zusätzlichen nachträglichen Bestückung der Kabeltragvorrichtung ein zusätzlicher Aussteifungsbedarf vorhanden ist.

Die Holmstützen können aus einem Blechabschnitt durch Kanten geformt sein. Ebenfalls ist es möglich, die Holmstützen aus Kunststoff, beispielsweise in einem Spritzgussverfahren herzustellen. Die Holmstützen weisen zweckmäßigerweise eine Profilierung in ihrer Querrichtung auf, um diese mit einer möglichst großen Steifheit auszustatten.

Die im Zusammenhang mit der Beschreibung der Erfindung beschriebenen Ausführungsbeispiele stellen für die Erfindung keine Limitierung dar, da sich auch andere Ausführungsbeispiele unter die Erfindung lesen lassen. Ferner ist die benutzte Terminologie lediglich zum Zwecke der Beschreibung verwendet worden, nicht jedoch zu einer Beschränkung. Dieses betrifft insbesondere den verwendeten Begriff "Kabeltragvorrichtung". Die beanspruchte und beschriebene Vorrichtung ist gleichermaßen zum Tragen von Rohren, Schläuchen und anderen langgestreckten Gegenständen vorgesehen.

Nachfolgend ist die Erfindung anhand von Ausführungsbeispielen unter Bezugnahme auf die beigefügten Figuren beschrieben. Es zeigen:
- **Fig. 1:**: einen schematisierten Querschnitt durch eine Kabeltragvorrichtung,
- **Fig. 2:**: eine Draufsicht auf eine Holmstütze der Kabeltragvorrichtung der Figur 1,
- **Fig. 3:**: einen Längsschnitt durch einen Abschnitt der Kabeltragvorrichtung der Figur 1,
- **Fig. 4:**: einen schematisierten Querschnitt durch eine Kabeltragvorrichtung gemäß einer weiteren Ausgestaltung,
- **Fig. 5:**: eine Seitenansicht einer weiteren Holmstütze und
- **Fig. 6:**: einen schematisierten Teilquerschnitt durch eine weitere Kabeltragvorrichtung.

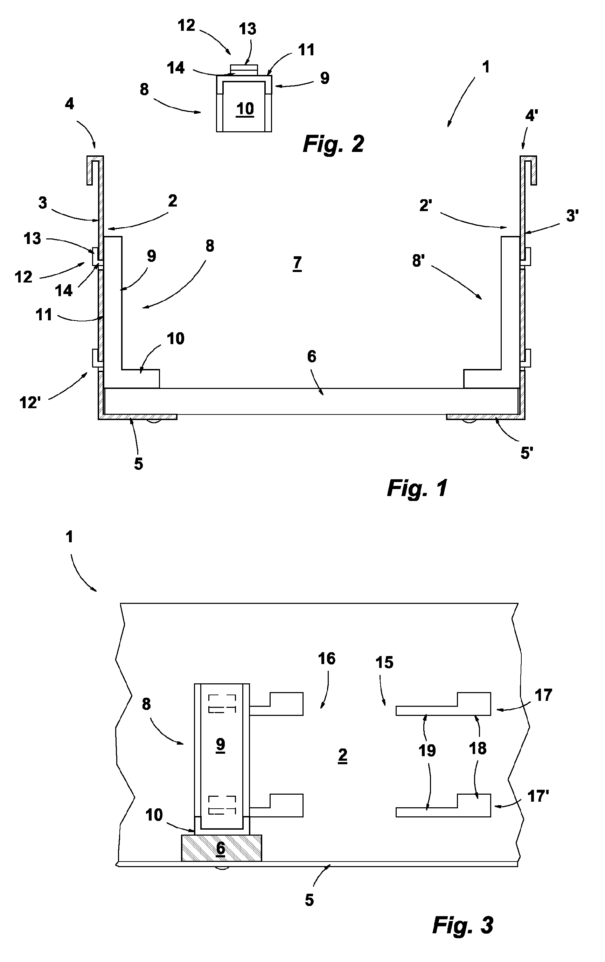

Eine Kabeltragvorrichtung 1 dient zum stationären Verlegen von elektrischen Kabeln, Rohren, Schläuchen oder dergleichen. Die Kabeltragvorrichtung 1 des in Figur 1 dargestellten Ausführungsbeispiels umfasst zwei der Längserstreckung der Kabeltragvorrichtung 1 folgende Holme 2, 2'. Jeder Holm 2, 2' verfügt über einen vertikalen Steg 3 bzw. 3', der jeweils oberseitig durch eine Abkantung U-förmig ausgebildet ist. Dieser U-förmige obere Abschluss 4 bzw. 4' dient zum Aufhängen der Kabeltragvorrichtung 1, beispielsweise an entsprechend deckenseitig herabhängenden Bändern, ausgerüstet mit jeweils einem Haken an dem freien Ende zum Eingreifen in die U-förmige, nach unten offene Abkantung der Abschlüsse 4 bzw. 4'. Der vertikale Steg 3 bzw. 3' eines jedem Holms 2, 2' verfügt im Bereich seines unteren vertikalen Abschlusses über einen der Längserstreckung des Holms 2 bzw. 2' folgenden Befestigungsschenkel 5 bzw. 5', der an den beiden Holmen 2, 2' jeweils zueinander weisend von der Ebene des vertikalen Steges 3 bzw. 3' abragt. Die Befestigungsschenkel 5, 5' dienen zum Befestigen und Tragen einer Bodeneinheit, die bei dem dargestellten Ausführungsbeispiel durch eine Vielzahl parallel und mit Abstand zueinander angeordneter Sprossen 6 gebildet ist. Die Sprossen 6 verbinden somit die Holme 2, 2' im Bereich ihres unteren Abschlusses. Gebildet ist somit durch die Holme 2, 2' bzw. die vertikalen Stege 3, 3' und der durch die Sprossen 6 gebildeten Bodeneinheit eine nach oben offene Kabelaufnahme 7.

Die Holme 2, 2' bestehen bei dem dargestellten Ausführungsbeispiel aus abgekanteten Blechstreifen.

Zur Vermeidung einer Verwindung der Holme 2, 2' bei einer Belastung der Kabeltragvorrichtung 1 und zum Aussteifen derselben dienen mehrere, an bestimmten Positionen innerhalb der Längserstreckung der Kabeltragvorrichtung 1 angeordnete Holmstützen, von denen in Figur 1 die Holmstützen 8, 8' erkennbar sind. Im folgenden ist die Holmstütze 8 als solche und in ihrer Anordnung zu dem Holm 2 bzw. der Sprosse 6 näher beschrieben. Der Holm 8' ist identisch aufgebaut.

Die Holmstütze 8 ist L-förmig konzipiert, wobei der längere Schenkel 9 der Holmstütze 8 mit seinem Rücken an der Innenseite des Holms 2 anliegt. Der kürzere Schenkel 10 der Holmstütze 8 grenzt rechtwinklig an den längeren Schenkel 9 und stützt sich mit seiner Unterseite auf der Oberseite der Sprosse 6 ab. An dem Rücken 11 der Holmstütze 8 sind zwei in vertikaler Richtung mit Abstand übereinander angeordnete Befestigungselemente 12, 12' nach außen abragend angeformt. Das Befestigungselement 12 besteht aus einem Riegelglied 13, das über einen Steg 14 mit dem Rücken 11 der Holmstütze 8 verbunden ist. Das Riegelglied 13 hintergreift den Steg 3 des Holmes 2; der Steg 14 durchgreift eine Öffnung des Holmes 2. In der in Figur 1 gezeigten montierten Stellung der Holmstütze 8 liegt die Unterseite des kürzeren Schenkels 10 der Holmstütze 8 auf der Oberseite der Sprosse 6 auf. Gleichermaßen liegt die Oberseite des Steges 14 an der oberen Begrenzung der Holmöffnung an, durch die der Steg 14 hindurchgeführt ist. Das Befestigungselement 12' ist entsprechend konzipiert wie das Befestigungselement 12.

Die Holmstütze 8 ist ein Kunststoffspritzgussteil und - wie aus der Draufsicht der Figur 2 erkennbar - im Querschnitt U-förmig profiliert, um der Holmstütze 8 die notwendige Steifigkeit zu verleihen.

Figur 3 zeigt einen Ausschnitt eines Längsschnittes durch die Kabeltragvorrichtung 1 der Figur 1 im Bereich der Sprosse 6. Erkennbar ist aus dieser Darstellung, dass der Holm 2 der Längserstreckung folgend mit Abstand zueinander angeordnete Holmöffnungspaare 15, 16 aufweist, bestehend aus jeweils zwei übereinander angeordneten Holmöffnungen 17, 17'. In Figur 3 sind lediglich die Holmöffnungen 17, 17' der Übersicht halber zu dem Holmöffnungspaar 15 mit Bezugszeichen gekennzeichnet. Jede Holmöffnung 17, 17' umfasst einen Einsetzabschnitt 18, dessen Breite und Höhe geringfügig größer bemessen ist als die Dimensionierung des Riegelgliedes 13 der Holmstütze 8. Somit kann ein Befestigungselement 12 einer Holmstütze 8 bzw. 8' mit seinem Riegelglied 13 in diesen Abschnitt einer Holmöffnung eingesetzt werden. An den Einsetzabschnitt 18 grenzt ein Verriegelungsabschnitt 19, dessen lichte vertikale Weite etwas größer ist als die vertikale Erstreckung des Steges 14 eines Befestigungselementes 12. Somit kann nach Einbringen des Riegelgliedes 13 die Holmstütze 8 mit seinem Befestigungselement 12 in den Verriegelungsabschnitt 19 verschoben werden, so dass dann das Riegelglied 13 den Holm 2 hintergreift, wie dieses in Figur 1 dargestellt ist. Derartige Holmöffnungspaare 15, 16 sind über die Längserstreckung des Holmes 2 mit Abstand zueinander regelmäßig angeordnet, so dass eine Holmstütze 8, 8' an quasi beliebiger Stelle gesetzt werden kann.

Der Holm 2' ist entsprechend konzipiert, so dass in gleicher Weise die Holmstützen 8' eingesetzt werden können.

Bei einer Belastung der Kabeltragvorrichtung 1 durch das Gewicht von in die Kabelaufnahme 7 eingelegten Kabeln verhindern die Holmstützen 8, 8' wirksam ein Verwinden der Holme 2, 2'; durch diese ist ein stabiles, nach oben offenes Kastenprofil gebildet.

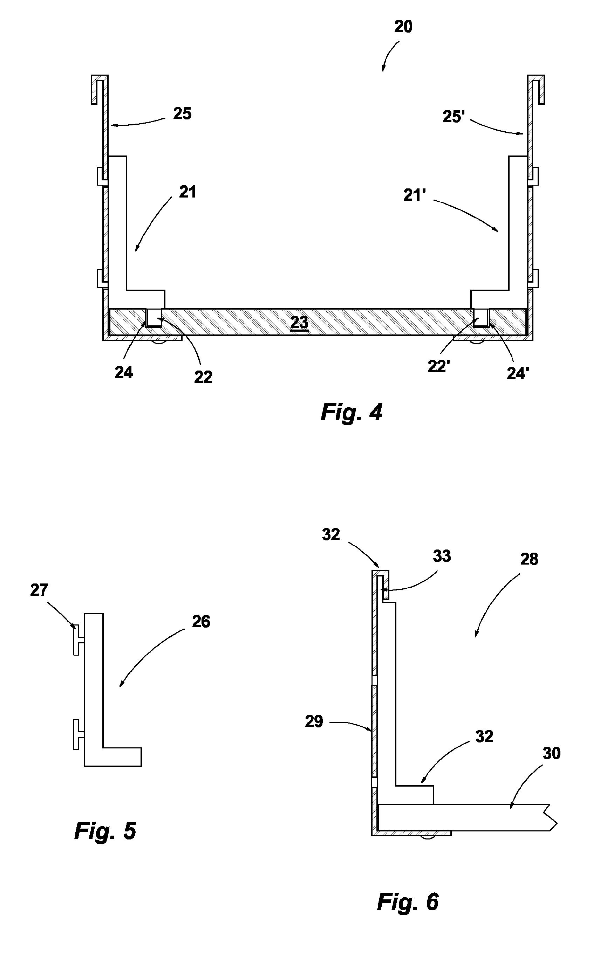

Figur 4 zeigt eine weitere Ausgestaltung einer Kabeltragvorrichtung 20, die grundsätzlich aufgebaut ist wie die Kabeltragvorrichtung 1 der Figuren 1 bis 3. Im Unterschied zu der Kabeltragvorrichtung 1 der Figuren 1 bis 3 verfügen die Holmstützen 21, 21' der Kabeltragvorrichtung 20 jeweils über einen von der Unterseite des kürzeren Schenkels nach unten abragenden Zapfen 22 bzw. 22', der jeweils in eine in die Oberseite einer Sprosse 23 eingebrachte Bohrung 24, 24' eingreift. Dieses Eingreifen ist in einer solchen Art und Weise vorgesehen, dass der Zapfen 22 bzw. 22' im Bereich seiner zu der jeweils anderen Holmstütze 21' bzw. 21 weisenden Seite an der Wandung der jeweiligen Bohrung 24 bzw. 24' anliegt. Durch das Eingreifen der Zapfen 22 bzw. 22' in die Sprosse 23 in der beschriebenen Art und Weise sind die Holme 25, 25' durch die Holmstützen 21, 21' auch gegen einer Verwindung nach außen gesichert. Die Zapfen 22, 22' können beispielsweise in vertikaler Richtung bewegbar sein, so dass die Holmstützen 21, 21' in der zu den Figuren 1 bis 3 beschriebenen Art und Weise an einem Holm 25 bzw. 25' befestigt werden können und nach Verschieben der Holmstützen 21 bzw. 21' in ihre bestimmungsgemäße Position die Zapfen 22, 22' in die Bohrungen 24, 24' abgesenkt werden.

Anstelle der zur Figur 4 beschriebenen formschlüssigen Verbindung zur Vermeidung einer nach außen gerichteten Verwindung der Holme 25, 25' mit der Sprosse 23 kann anstelle der Zapfen 22, 22' ebenfalls eine Lasche oder auch eine verkröpfte Lasche vorgesehen sein, wobei letztere die Sprosse gegebenenfalls durchgreifen kann.

Figur 5 zeigt in einer Seitenansicht eine weitere Holmstütze 26, deren Befestigungselemente als Riegelglied jeweils einen Teller 27 aufweisen. Durch den Einsatz der Teller 27 wird die Anlagefläche an der Außenseite der Holme vergrößert und eine Verwindung der Holme nach außen entgegengewirkt. Bei Einsatz von Holmstützen 26 gemäß der Ausgestaltung zu Figur 5 verfügen die Holme über Holmöffnungen mit einer schlüssellochförmigen Kontur.

Figur 6 zeigt den linken Abschnitt einer weiteren Kabeltragvorrichtung 28. Die Kabeltragvorrichtung 28 verfügt über Seitenholme 29, die unterseitig durch Sprossen 30 miteinander verbunden sind. Zur Aussteifung der Seitenholme 29 sind Holmstützen 31 eingesetzt, die mit ihrer Rückseite an der Innenseite des Seitenholms 29 anliegen. Die Holmstützen 31 sind L-förmig konzipiert, ebenso wie die Holmstützen der vorbeschriebenen Ausführungsbeispiele. Mit der Unterseite des oberseitig auf der Sprosse 30 aufliegenden Schenkels 32 stützt sich die Holmstütze 31 auf der Oberseite der Sprosse 30 ab. Zum Halten der Holmstützen 31 an der Kabeltragvorrichtung 28 verfügen die Seitenholme 29 über einen U-förmigen oberen Abschluss 32, der im Gegensatz zu den vorbeschriebenen Ausführungsbeispielen nach innen gerichtet ist. Die Holmstützen 31 verfügen über eine obere Einsetzlasche 33, die in die durch den oberen Abschluss 32 nach unten offene Nut eingesetzt ist und mit ihrem oberen Abschluss an dem Nutentiefsten anliegt. Die Holmstützen 31 können durch Einschwenken eingesetzt werden. Die Holmstützen 31 sind somit an den Seitenholmen 29 gehalten, ohne dass diese über die Seitenholme 29 durchgreifende Befestigungselemente benötigen.

In einer Weiterbildung der vorbeschriebenen Ausführungsbeispiele kann vorgesehen sein, dass die Holmstützen eine gewisse Erstreckung in Längsrichtung der Kabeltragvorrichtungen aufweisen, damit diese als Verbinder zweier stirnseitig aneinandergrenzender Seitenholme eingesetzt werden können. Die als Verbinder eingesetzten Holmstützen sind an beiden aneinandergrenzenden Seitenholmen befestigt. Durch diese Holmstützen wird im Bereich einer Verbindung zweier Seitenholme nicht nur eine Aussteifung bewirkt, sondern es werden die Seitenholme ebenfalls miteinander verbunden.

### Bezugszeichenliste

- 1: Kabeltragvorrichtung
- 2, 2': Holm
- 3, 3': Steg
- 4, 4': oberer Abschluss
- 5, 5': Befestigungsschenkel
- 6: Sprosse
- 7: Kabelaufnahme
- 8, 8': Holmstütze
- 9: längerer Schenkel
- 10: kürzerer Schenkel
- 11: Rücken
- 12, 12': Befestigungselement
- 13: Riegelglied
- 14: Steg
- 15: Holmöffnungspaar
- 16: Holmöffnungspaar
- 17, 17': Holmöffnung
- 18: Einsetzabschnitt
- 19: Verriegelungsabschnitt
- 20: Kabeltragvorrichtung
- 21, 21': Holmstütze
- 22, 22': Zapfen
- 23: Sprosse
- 24, 24': Bohrung
- 25, 25': Holm
- 26: Holmstütze
- 27: Teller
- 28: Kabeltragvorrichtung
- 29: Seitenholm
- 30: Sprosse
- 31: Holmstütze
- 32: oberer Abschluss
- 33: Einsetzlasche

## Patentansprüche

1. Kabeltragvorrichtung mit zwei mit Abstand zueinander verlaufenden, mit einem Steg (3, 3') eine Kabelaufnahme (7) seitlich einfassenden Holmen (2, 2'; 25, 25') und mit einer die beiden Holme (2, 2') im Bereich ihres unteren Abschlusses miteinander verbindenden und die Kabelaufnahme (7) unterseitig begrenzenden Bodeneinheit (6; 23), **dadurch gekennzeichnet, dass** an den beiden Holmen (2, 2'; 25, 25') an ihrer jeweils zur Kabelaufnahme (7) weisenden Seite ein oder mehrere Holmstützen (8, 8'; 21, 21'; 26) angeordnet sind, die sich mit ihrer Unterseite auf der Oberseite der Bodeneinheit (6; 23) mit Abstand zur Ebene des Steges (3, 3') der Holme (2, 2'; 25, 25') abstützen und rückseitig an einem Holm (2, 2'; 25, 25') in einer den Holm (2, 2'; 25, 25') im Bereich der Holmstütze (8, 8'; 21, 21', 26) aussteifenden Anordnung befestigt sind.

2. Kabeltragvorrichtung nach Anspruch 1, **dadurch gekennzeichnet, dass** jede Holmstütze (8, 8'; 21, 21'; 26) über zumindest ein zum Holm abragendes hakenartiges Befestigungselement (12, 12') mit einem Riegelglied (13, 27) verfügt, dessen Riegelglied (13, 27) zur aussteifenden Anordnung der Holmstütze (8, 8'; 21, 21'; 26) an dem Holm (2, 2'; 25, 25') in eine Holmöffnung (17, 17') oder Aufnahme des Holms (2, 2', 25, 25') eingreift und diese hintergreift, wobei der Abstand des Riegelgliedes (13, 27) von der Anlagefläche (11) der Holmstütze (8, 8'; 21, 21'; 26) an dem Holm (2, 2'; 25, 25') im wesentlichen der Stärke der die Holmöffnung (17, 17') bzw. die Aufnahme einschließenden Bereiche des Holms (2, 2'; 25, 25') entspricht.

3. Kabeltragvorrichtung nach Anspruch 2, **dadurch gekennzeichnet, dass** die unterseitige Begrenzung der Holmöffnung (17, 17') bzw. der Aufnahme auf einem das Riegelglied (13, 27) mit der Holmstütze (8, 8'; 21, 21'; 26) verbindenden Steg (14) anliegt, wenn sich die Unterseite der Holmstütze (8, 8'; 21, 21'; 26) auf der Oberseite der Bodeneinheit (6, 23) abstützt.

4. Kabeltragvorrichtung nach Anspruch 3, **dadurch gekennzeichnet, dass** die Holme (2, 2') Holmöffnungen (17, 17'), zweckmäßigerweise in regelmäßigen Abständen zueinander in Längserstreckung des Holms (2, 2') angeordnet, mit jeweils einen Einsetzabschnitt (18) mit einer dem Riegelglied (13) entsprechenden Kontur zum Einführen des Riegelgliedes (13) des Befestigungselementes (12, 12') in die Holmöffnung (17, 17') und einen Verriegelungsabschnitt (19) mit einer der Höhe des die Holmstütze (8, 8') mit dem Riegelglied (13) verbindenden Steg (14) entsprechenden lichten vertikalen Weite aufweisen.

5. Kabeltragvorrichtung nach Anspruch 4, **dadurch gekennzeichnet, dass** der Einsteckabschnitt von dem Verriegelungsabschnitt durch eine Einschnürung getrennt ist.

6. Kabeltragvorrichtung nach Anspruch 2 oder 3, **dadurch gekennzeichnet, dass** das Befestigungselement elastische Eigenschaften mit einer solchen Konzeption aufweist, dass das Riegelglied unter Ausnutzung dieser Eigenschaften in seine die Hakenöffnung oder Hakenaufnahme hintergreifende Anordnung gebracht werden kann.

7. Kabeltragvorrichtung nach einem der Ansprüche 1 bis 6, **dadurch gekennzeichnet, dass** die Holmstützen über ein Verbindungselement zum formschlüssigen Verbinden der Holmstützen mit der Bodeneinheit verfügen.

8. Kabeltragvorrichtung nach Anspruch 7, **dadurch gekennzeichnet, dass** das Verbindungselement ein in die Bodeneinheit eingreifendes Element, etwa ein Zapfen (22, 22'), eine Lasche, ein Haken oder dergleichen ist.

9. Kabeltragvorrichtung nach einem der Ansprüche 1 bis 8, **dadurch gekennzeichnet, dass** die Holmstützen (8, 8'; 21, 21') L-förmig sind, wobei der längere Schenkel (9) bei an dem Holm (2, 2'; 25, 25') montierter Holmstütze (8, 8'; 21, 21') mit seiner Rückseite (11) an dem Holm (2, 2'; 25, 25') anliegt und der kürzere Schenkel (10) sich mit seiner Unterseite auf der Oberseite der Bodeneinheit abstützt.

10. Kabeltragvorrichtung nach Anspruch 9, **dadurch gekennzeichnet, dass** die Holmstützen (8, 8') im Querschnitt U-förmig sind.

11. Kabeltragvorrichtung nach Anspruch 1, **dadurch gekennzeichnet, dass** jede Holmstütze (31) über einen oberen Endabschnitt (33) verfügt, der sich mit seiner oberen Stirnfläche an einer nach innen gerichteten Abkantung des der Holmstütze (31) zugeordneten Seitenholms (29) abstützt.

12. Kabeltragvorrichtung nach einem der Ansprüche 1 bis 11, **dadurch gekennzeichnet, dass** die Kabeltragvorrichtung als Weitspannrinne oder Weitspannleiter ausgelegt ist und die Holmstützen im Bereich der Aufhängungspunkte der Kabeltragvorrichtung angeordnet sind.
